# EUROPÄISCHE PATENTSCHRIFT

(11) **EP 2 196 487 B1**
(45) Veröffentlichungstag und Bekanntmachung des Hinweises auf die Patenterteilung: **13.04.2016**
(21) Anmeldenummer: 09172639.8
(22) Anmeldetag: 09.10.2009
(51) Int. Cl.: C08G 65/00

(54) **Siliconpolyether-Copolymersysteme sowie Verfahren zu deren Herstellung durch Alkoxylierungsreaktion**
Silicone polyether copolymer systems and method for production of same using alkoxylation reaction
Systèmes copolymères de silicone polyéther et leur procédé de fabrication par réaction d'alkoxylation

(30) Priorität: 29.10.2008 DE 102008043245
(43) Veröffentlichungstag der Anmeldung: 16.06.2010
(73) Patentinhaber: Evonik Degussa GmbH, 45128 Essen (DE)
(72) Erfinder: Knott, Wilfried Dr., 45355, Essen (DE); Schubert, Frank Dr., 47506, Neukirchen-Vluyn (DE); Henning, Frauke, 45130, Essen (DE)

(56) Entgegenhaltungen:
- EP-A1- 2 093 244
- EP-A1- 2 107 077
- EP-A1- 2 138 526
- EP-A2- 0 573 864
- US-A- 5 719 249
- US-A- 5 880 245

## Beschreibung

Die Erfindung betrifft ein Verfahren zur Doppelmetallcyanid-katalysierten Alkoxylierung von Siliconpolyethercopolymeren und deren Mischungen mit Polyetherolen zu hochmolekularen, hydrophobe und hydrophile Strukturelemente aufweisenden Siliconpolyether-Copolymersystemen. Der Gegenstand der Erfindung ist definiert in den Ansprüchen 1-6 wie anhängend.

Siliconpolyether-Copolymere stellen eine Substanzklasse dar, die Eingang in vielfältige technische Anwendungen nimmt, z.B. als Tenside, Emulgatoren, Netz- und Dispergieradditive, Lackverlaufsmittel, Schmiermittel, als Hilfsmittel zur tertiären Erdölförderung, als Textilhilfsmittel zum Avivieren von Fasern, Garnen oder flächigen Textilprodukten als Entschäumer, als kosmetische Additive (Emulgatoren) und als Schaumstabilisatoren insbesondere im Polyurethan-Schaum.

Die Polyethersiloxane sind deshalb so vielseitig brauchbar, da man ihre Eigenschaften, insbesondere ihre Hydrophil/Hydrophob-Balance durch geeignete Wahl des Siloxanblockes oder der Siloxanblöcke einerseits und durch geeigneten Aufbau des Polyetherblockes oder der Polyetherblöcke beeinflussen und auf den gewünschten Wert einstellen kann.

Der Siloxanblock kann linear oder verzweigt sein, wobei die absolute Zahl an di- und trifunktionellen Siloxy-Einheiten und deren Zahlenverhältnis zueinander in weiten Grenzen einstellbar sind. Es ist darüber hinaus möglich, neben Polyoxyalkylenresten auch andere modifizierende Gruppen an die Si-Atome zu binden. Beispiele sind langkettige Kohlenwasserstoffreste, mit Halogenatomen, Cyanogruppen oder polaren Resten substituierte Kohlenwasserstoffreste, Hydroxylgruppen, etc.

Bei den Siliconpolyether-Copolymeren unterscheidet man prinzipiell zwischen SiOC- bzw. SiC-verknüpften Systemen. Im ersten Fall ist das Siloxangerüst via SiOC-Bindungen mit den Polyetherresten verbunden. Im zweiten Fall erfolgt die Verknüpfung des Siloxanteils mit den Polyetherresten über SiC-Bindungen.

Die ältere Route der SiOC-Verknüpfung bedient sich z.B. des Einsatzes von Chlorsiloxanen, die mit Polyetheralkoholen und oft auch unter Einsatz aminischer Hilfsbasen als Salzsäurefänger zu Polyethersiloxanen umgesetzt werden. Ein alternativer Zugang zu SiOCbasierten Polyethersiloxanen erschließt sich über die dehydrogenative Umsetzung SiH-Gruppen-tragender Siloxane (Wasserstoffsiloxane) mit Polyetheralkoholen in Gegenwart von Katalysatoren. Als Katalysatoren finden z.B. Säuren, Basen und Metallkomplexe und auch Tris(pentafluorphenyl)boran Verwendung. Spezielle lineare Polyethersiloxane sind durch direkte Alkoxylierung von SiOH-Gruppen tragenden α,ω-Dihydroxysiloxanen mit Epoxidmonomeren zugänglich, wie es in der nicht vorveröffentlichten Schrift DE 10 2008 002713.8 beschrieben wird.

Den Zugang zu SiC-verknüpften Polyethersiloxan-Copolymeren eröffnet die Hydrosilylierung, d.h., die zumeist Edelmetall-katalysierte Addition SiH-Gruppen aufweisender Siloxane an ungesättigte Polyether z.B. an Derivate des Vinyl- oder Allylalkohols. Zur Synthese der verbreiteten Allylpolyether-basierten Copolymersysteme werden die ungesättigten Polyether im deutlichen stöchiometrischen Überschuss von meist 20 bis 40 mol-% bezogen auf die SiH-Äquivalente des verwendeten Wasserstoffsiloxans eingesetzt, um der Tatsache Rechnung zu tragen, dass je nach gewähltem Herstellweg wechselnde Mengen an Propenylpolyether bereits im Allylpolyether enthalten sind und, um der in der Hydrosilylierung unvermeidbaren Allyl-Propenyl-Umlagerung zu begegnen, die einen Teil des eingesetzten Allylpolyethers für die SiC-Verknüpfungssreaktion unbrauchbar macht. Es sei darauf hingewiesen, dass die Begriffe Polyether oder Polyetherol teilweise synonym in der Literatur und dieser Anmeldung Verwendung finden, sich jedoch eindeutig von den Siliconpolyether-Copolymeren unterscheiden.

Als Konsequenz aus diesem Vorgehen enthalten die technisch verfügbaren, SiC-verknüpften Siliconpolyether-Copolymere, die sich von Allylpolyethern herleiten, nicht unbeträchtliche Mengen des isomerisierten Überschusspolyethers, der mit seiner β-ständigen Doppelbindung zwar nicht mehr hydrosilylierbar ist, aber stark komplexierend auf Metalle, wie z.B. auf die in der Hydrosilylierung vielfach eingesetzten Platinkomplexe wirkt.

Die Polyetherole, oft auch kurz einfach als Polyether bezeichnet, sind seit langem bekannt und werden in großen Mengen technisch hergestellt und dienen unter anderem durch Umsetzung mit Polyisocyanaten als Ausgangsverbindungen zur Herstellung von Polyurethanen oder aber auch zur Herstellung von Tensiden.

Die meisten Verfahren zur Herstellung von Alkoxylierungsprodukten (Polyethern) bedienen sich basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Durch Umlagerung von Propylenoxid in Allylalkohol, der seinerseits als Kettenstarter fungiert, und Kettenabbruchreaktionen entstehen Polyether mit relativ breiter Molmassenverteilung und ungesättigten Nebenprodukten. Insbesondere mit Allylalkohol als Startalkohol bringt die unter alkalischer Katalyse durchgeführte Alkoxylierungsreaktion auch Propenylpolyether hervor. Diese Propenylpolyether erweisen sich bei der hydrosilylierenden Weiterverarbeitung zu SiC-gestützten Siliconpolyether-Copolymeren als unreaktive Beiprodukte und sind zudem - durch die hydrolytische Labilität der in ihnen enthaltenen Vinyletherbindung und Freisetzung von Propionaldehyd - unerwünschte Quelle olfaktorischer Produktbelastungen. Dies ist beispielsweise in der EP-A-1 431 331 beschrieben.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration.
Neben der basenkatalysierten Reaktion sind auch saure Katalysen zur Alkoxylierung bekannt. So wird in DE 10 2004 007561 die Verwendung von HBF₄ und von LewisSäuren wie z.B. BF₃, AlCl₃ und SnCl₄ in der Alkoxylierungstechnologie beschrieben.
Als nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekundären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.

Als Katalysatoren zur Herstellung von Polyetheralkoholen werden aber auch häufig Multimetallcyanidverbindungen oder Doppelmetallcyanid-Katalysatoren, allgemeingebräuchlich auch als DMC-Katalysatoren bezeichnet, eingesetzt. Durch den Einsatz von DMC-Katalysatoren wird der Gehalt an ungesättigten Nebenprodukten minimiert, außerdem verläuft die Umsetzung, verglichen mit den üblichen basischen Katalysatoren, mit einer deutlich höheren Raum-ZeitAusbeute. Die Herstellung und Verwendung von Doppelmetallcyanid-Komplexen als Alkoxylierungskatalysatoren ist seit den 1960er Jahren bekannt und wird zum Beispiel in US 3,427,256, US 3,427,334, US 3,427,335, US 3,278,457, US 3,278,458, US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Die mit DMC-Katalysatoren hergestellten Alkoxylierungsprodukte zeichnen sich durch eine viel engere Molmassenverteilung im Vergleich zu alkalisch katalysierten Produkten aus. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Die im unmittelbaren Vergleich mit Alkali- und Säurekatalyse an DMC-Katalysatoren durchgeführte Alkoxylierungsreaktion ist unter den beschriebenen technischen Eigenarten so vorteilhaft, dass sie zur Entwicklung kontinuierlicher Prozesse zur Herstellung volumenstarker einfacher, zumeist nur aus PO-Einheiten bestehender, Polyetherole geführt hat.

Die EP 0 485 637 lehrt ein Verfahren zur Herstellung von Polyoxyalkylengruppen aufweisenden Organopolysiloxanen, das vorsieht, Organosiloxane, deren funktionelle Gruppen gegenüber Alkylenoxiden aktive Wasserstoffatome enthalten, und Fluorverbindungen mit Hilfe von Alkylenoxiden einer ringöffnenden Polymerisation an Multimetallcyanidkomplexen zu unterziehen. Als Nachteil einer säure-katalysierten Herstellung der Organopolysiloxane wird hier herausgestellt, dass als Nebenprodukte Homopolymere der Alkylenoxide entstehen, die es erschweren würden Polyoxyalkylen-Verbindungen mit hohen Molmassen zu erzeugen.

Die in der EP0 485 637 beschriebenen, molmassendefinierten, reinen organischen Fluorverbindungen sind dabei ebenso leicht zu alkoxylieren wie die in der Lehre beanspruchten Organosiloxanderivate, deren Funktionalität aktive Wasserstoffgruppen des Typs -OH, -SH, -NH₂, -NHR und -CO₂H gebunden an einen C₃-C₁₀-Kohlenwasserstoffrest, der wahlweise eine Ether-, Thioether- oder Aminoverbrückung enthält, vorsieht. Die z.B. via Hydrosilylierung zugänglichen Organosiloxan-Edukte sind leicht zu reinigen, da man den Überschussanteil der bei ihrer Herstellung eingesetzten niedermolekularen Alkohole, Thioalkohole, Amine und Säuren recht einfach destillativ abtrennen kann. Die in EP 0 485 637 geforderte Hydrophobie der eingesetzten Organosiloxan-Kettenstarter bedingt zum einen, dass diese frei von hydrophilen Polyether-Überschussanteilen sein müssen, und zum anderen, dass ihre chemische Grundstruktur von einem hydrophoben, relativ langkettigen Siloxangrundkörper dominiert wird, an dem SiC-verknüpfte kurze organische, keinesfalls als Polyether zu bezeichnende, vorzugsweise OH-funktionelle Reste mit maximal 10 C-Atomen angebunden sind. Derartige hydrophobe Produkte sind molekular einheitlich und in GPC-Analysen durch einen einzelnen Peak, monomodal, gekennzeichnet.
Sie stellen somit keine klassischen tensidisch wirksamen Polyethersiloxane dar, deren typisches Kennzeichen es ist, dass sie technische, nicht aufgereinigte Copolymere mit langen SiC-gebundenen terminalen oder seitenständigen hydrophilen Polyetherketten darstellen und darüber hinaus weitere Komponenten wie hydrophile ungesättigte Polyether und deren Umlagerungsprodukte enthalten. Grundsätzlich ist es ein Wesensmerkmal der Polyethersiloxane, dass sie aus einem hydrophoben Siloxangerüst und einem hydrophilen Polyetheranteil bestehen und komplexe chemische Zusammensetzungen, also keine definierten Reinsubstanzen darstellen. So ist bei tensidischen Anwendungen ein ausgewogenes, möglichst einstellbares Verhältnis zwischen den hydrophoben (Siloxan-Rückgrat) und hydrophilen (Polyethersubstitution) Resten nicht nur gewünscht, sondern erforderlich. In technischen Polyethersiloxanen bestimmt nicht allein der chemische Aufbau des Polyether-Siloxan-Copolymeren das Eigenschaftsbild, sondern ganz maßgeblich auch der immer vorhandene Anteil an Überschusspolyethern, der immerhin meist 20-40 Gew.-% des Gesamtprodukts ausmacht und dem System eine erhöhte Hydrophilie verleiht. Die Praxis lehrt, dass die grenzflächenaktiven Eigenschaften solcher Hydrosilylierungsprodukte von der Summe aller Einzelkomponenten, deren chemischen Aufbau, deren Molmasse und Molmassenverteilung und deren prozentualen Anteil im Gesamtsystem bestimmt wird. In GPC-Analysen äußert sich die Komplexität der durch Hydrosilylierung erhaltenen Produkte, ganz im Gegensatz zu den in EP 0 485 637 genannten hydrophoben Organosiloxanen, in Form von multimodalen Kurvenverläufen und sehr breiten Molmassenverteilungen. So sind GPC-Analysen typischer technischer Polyethersiloxane durch mindestens zwei Peakmaxima oder mindestens zwei sich in ihrer Molmasse signifikant unterscheidenden Peakgruppen gekennzeichnet. Das Vorhandensein freier Polyether äußert sich durch ein oder mehrere Peaks im niedermolekularen Bereich, oft bei Molmassen von unter 5.000 g/mol. Diese Anteile von meist Allylalkohol-basierenden Überschusspolyethern stellen im Gesamtsystem relativ hydrophile Komponenten dar. Die GPC-Maxima im höhermolekularen Bereich bis 100.000 g/mol oder gar darüber hinaus gehen auf Polysiloxan-Polyether-Copolymere zurück. Sie stellen in vielen Reaktionsgemischen nach der Hydrosilylierung die Hauptkomponenten dar und sind häufig zu 60-80 Gew.-% enthalten. Sie beinhalten in ihrer Struktur sowohl einen hydrophoben Siloxangrundkörper als auch eine oder mehrere hydrophile Polyetherketten, chemisch über SiC-Bindungen verknüpft, in einem Molekül.
Die Anwendungseigenschaften dieser hydrophobe und hydrophile Strukturelemente aufweisenden Stoffgemische werden entscheidend von ihrer chemischen Zusammensetzung und vom chemischen Aufbau aller Einzelkomponenten bestimmt. Die Zusammensetzung der Polyethersiloxane ist wiederum unmittelbar mit dem Verfahrensprinzip der Hydrosilylierung verknüpft. Praktisch alle Reaktionsprodukte bei der Edelmetall-katalysierten Anlagerung von z.B. Allylpolyethern an Wasserstoffsiloxane während der Hydrosilylierung, also auch Umlagerungsprodukte oder nicht umgesetzte Edukte, sind Bestandteil des Endprodukts. Der Flexibilität bei der gezielten Entwicklung von Polyethersiloxanen werden somit Grenzen gesetzt, die in der Chemie des Hydrosilylierprozesses liegen.

So lassen sich Polyethersiloxane mit sehr langkettigen Polyethern nur schwierig bis gar nicht herstellen, da die Reaktionsgeschwindigkeit bei der Hydrosilylierung mit zunehmender Kettenlänge des Polyethers immer weiter abnimmt und kein quantitativer SiH-Umsatzes möglich ist bzw. die Katalysatormenge und Reaktionszeit so stark erhöht werden muss, dass die Herstellung unwirtschaftlich ist.

Die an das jeweilige Siloxangerüst terminal oder seitenständig angebundenen Polyetherketten sind bzgl. ihrer Kettenlänge, ihrer Molmassenverteilung und Monomerabfolge stets identisch mit den Überschusspolyethern. Bei vorgegebenen Edukten kann einzig das Mischungsverhältnis von Überschusspolyethern zu Siliconpolyethern über die Hydrosilylierungsbedingungen beeinflusst werden. In GPC-Analysen äußert sich das darin, dass die Lage der Peaks entlang der Molmassenachse praktisch unveränderbar ist, wenn die zu hydrosilylierenden Edukte-Wasserstoffsiloxan und Polyether - vorgegeben sind.

Es ist nach heutigem Stand der Technik nicht möglich, Polyethersiloxansysteme herzustellen, bei denen sich der freie Überschusspolyetheranteil strukturell vom SiC-verknüpften Polyetheranteil des Copolymeren unterscheidet.

Erstaunlicherweise wurde nun gefunden, dass selbst komplex zusammengesetzte, hydrophobe und hydrophile Strukturelemente aufweisende technische Siliconpolyether-Copolymere als Kettenstarter für Alkoxylierungsreaktionen eingesetzt werden können. Dieses Ergebnis ist für den Fachmann überraschend, weil sich diese Substanzen nicht nur durch eine deutlich geringere Dichte an aktiven Wasserstoffatomen auszeichnen, sondern auch von geringerer Reinheit als die üblicherweise verwendeten Starter sind. Solche hochfunktionalisierten Polyethersiloxane werden z.T. durch eine gemeinsame Hydrosilylierung von Wasserstoffsiloxanen mit Gemischen aus unterschiedlich hochmolekularen Polyethern gewonnen, so dass sich in solchen Fällen extrem breite Molekulargewichtsverteilungen und multimodale GPC-Kurven ergeben. Die chemische Zusammensetzung der erfindungssgemäß als Kettenstarter für die Alkoxylierung eingesetzten Polyethersiloxane ist daher sehr komplex. Darüber hinaus enthalten diese Copolymere Nebenprodukte und Katalysatorreste aus der Hydrosilylierung, die nicht abgetrennt werden können. Diese Nebenprodukte und insbesondere Katalysatorreste stellen potentielle Katalysatorgifte im Rahmen der erfindungsgemäßen Alkoxylierung mittels DMC-Katalysatoren dar. Über den konventionellen Weg der alkalischen oder sauren Katalyse lassen sich Polyethersiloxane nicht selektiv zu kettenverlängerten Produkten alkoxylieren. Die stark basischen bzw. sauren Reaktionsbedingungen sowie der Einsatz von Wasser in der nachfolgenden Neutralisations-und Aufarbeitungsstufe führen unvermeidbar zu Umlagerungen und zu einer kaum steuerbaren Neuorganisation des Siloxankörpers.

Unter den annähernd neutralen und wasserfreien Reaktionsbedingungen der DMC-katalysierten Alkoxylierung gelingt es hingegen, auch hydrolyseempfindliche Verbindungen wie SiOH-Gruppen tragende Silanole oder OH-funktionelle Siliconpolyether unter Erhalt des Siloxangerüsts als Starter für den Aufbau höhermolekularer Siliconpolyether-Copolymerer einzusetzen. Das Verfahren der DMC-Katalyse erfährt nach bisheriger Lehrmeinung eine entscheidende Limitierung, wenn komplex zusammengesetzte Stoffgemische, bestehend aus gegenüber Epoxiden reaktiven Spezies stark unterschiedlicher Kettenlänge, im Gemisch alkoxyliert werden sollen. Dem Fachmann ist unter dem Begriff "Catch-up-Kinetik" bekannt, dass anders als bei der konventionellen basischen oder sauren Katalyse die Reaktivität gegenüber der Alkylenoxidanlagerung stark von der Molmasse der OH-funktionellen Startverbindungen abhängt. So ist bekannt, dass niedermolekulare Ketten wesentlich reaktiver als höhermolekulare Ketten sind. Die Präferenz für niedermolekulare Spezies ist dabei so ausgeprägt, dass sich nach bisherigem Wissensstand bei der Alkylenoxiddosage das oder die Epoxidmonomere an die nahezu alleinig jeweils kurzkettigsten reaktiven Komponenten in der jeweiligen Reaktionsmischung addieren. Die von der DMC-Katalyse bekannte ungleichmäßige Alkylenoxidaddition führt so zu einem ungleichen Kettenwachstum.
Vor dem Hintergrund der erheblichen Molmassenunterschiede beim Einsatz technischer Polyethersiloxane als Kettenstarter - freie Polyether mit mittleren Molmassen von meist < 4.000 g/mol existieren neben Siliconpolyethern mit meist 10.000-50.000 g/mol - wäre demnach zu erwarten, dass bei der DMC-katalysierten Alkoxylierung nahezu alles Alkylenoxid an den sehr niedermolekularen freien Polyetheranteil addiert wird.

Umso überraschender war daher die Entdeckung, dass selbst technische Siliconpolyether-Copolymere an Doppelmetallcyanid-Katalysatoren einer ringöffnenden Alkoxylierungsreaktion zugänglich sind, wobei sowohl die Polyethersiloxan-Copolymere als auch die freien Polyetheranteile ungeachtet ihrer so unterschiedlichen Hydrophilie bzw. Hydrophobie und Molmassen als OH-funktionelle Kettenstarter fungieren. Dieses Ergebnis ist für den Fachmann vollkommen unerwartet, weil es der geläufigen Ansicht von der Allgemeingültigkeit der "Catch-up-Kinetik" bei DMC-Katalysatoren widerspricht.

Siliconpolyethercopolymere im Sinne dieser Erfindung sind solche, die im Polyetherteil mindestens 5 Wiederholungseinheiten des Etherfragments (in Formel (Ia) durch den Index e gekennzeichnet) enthalten und/oder eine mittlere Molmasse des Polyetherfragments von mindestens 220 g/mol aufweisen.

Ganz besonders überraschend und überhaupt nicht vorhersehbar ist die spezielle und ungewöhnliche Kinetik, mit der die DMC-katalysierte Anlagerung von Alkylenoxiden an die unterschiedlichen OH-funktionellen Verbindungen des komplex zusammengesetzten Startgemischs stattfindet. Mit einer für das jeweilige System charakteristischen Geschwindigkeit wächst im Laufe der Alkylenoxidzuspeisung sowohl die Kettenlänge der freien Überschusspolyether als auch die Kettenlänge der an das Siloxan gebundenen Polyetherstränge. Dies widerspricht der dem Fachmann von der DMC-basierenden Alkoxylierung von z.B. Alkoholen oder Polyetherolen bekannten sogenannten "Catch-up-Kinetik" und der zum Beispiel in EP 1 942 126 A1 getroffenen Grundaussage, dass in einem Gemisch unterschiedlich hochmolekularer OH-funktioneller Starter fast ausschließlich die reaktiveren kurzkettigen Spezies reagieren. Doppelmetallcyanid-Katalysatoren besitzen gemäß EP 1 942 126 A1 prinzipiell eine ausgeprägte Präferenz für die jeweils niedermolekularsten Hydroxylgruppen tragenden Komponenten in einem Gemisch reaktiver Spezies.

Überraschend wurde nun gefunden, dass sich bei der DMC-katalysierten Alkoxylierung die Alkylenoxide keineswegs überwiegend an die niedermolekularen freien Überschusspolyether, sondern sich auch an die reaktive OH-Gruppen tragenden sehr viel höhermolekularen Polyethersiloxane addieren. Es entstehen auf diesem Wege hydrophobe und hydrophile Strukturelemente aufweisende, Siliconpolyether-Copolymere und Polyether enthaltende Mischungen mit bisher nicht erreichbarer neuer Zusammensetzung.

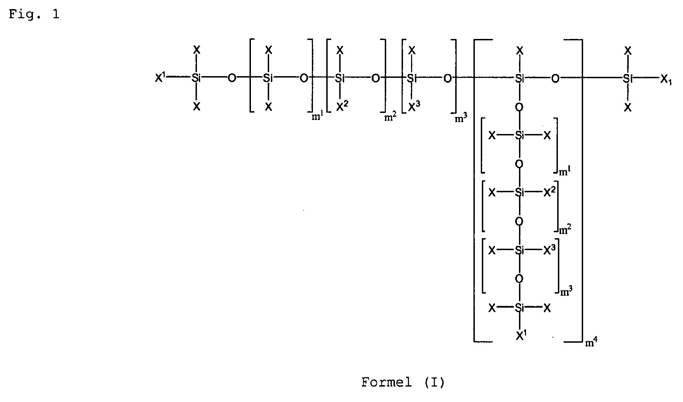

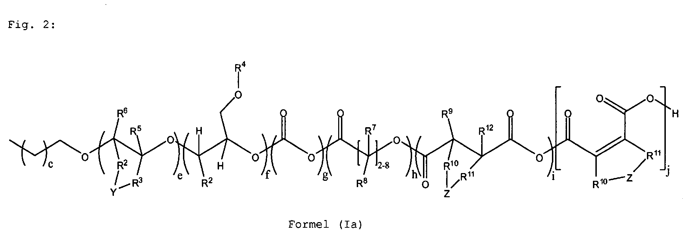

Aus GPC-Analysen wie in Abb. 1, Beispiel 5 gezeigt, wird deutlich, dass alle OH-Gruppen tragenden Komponenten des Polyethersiloxans an der Alkoxylierungsreaktion teilnehmen. Dadurch jedoch, dass die Kettenlänge der Siloxan-gebundenen Polyethersegmente mit einer anderen Geschwindigkeit als die der freien Überschusspolyether wächst, entstehen neue Polyethersiloxansysteme. Das charakteristische Kettenwachstum der reaktiven Spezies wird in GPC-Analysen in Form der relativen Verschiebung der Peaks entlang der Molmassenachse deutlich.
Abb. 1 (Beispiel 5) zeigt das für das erfindungsgemäße Verfahren typische Kettenwachstum aller OH-funktionellen Komponenten eines Polyethersiloxans bei der stufenweisen Addition von Propylenoxid. Der Kettenstarter in Abb. 1 ist ein Polyethersiloxan, das zuvor durch Hydrosilylierung eines Wasserstoffsiloxans der Formel (I) mit der Struktur m¹ = 42, m² = 6, m³ = m⁴ = 0, X = X¹ = Methyl mit einem 35 val-%igen Überschuss (bezogen auf die SiH-Gruppen) eines OH-terminierten Allylpolyethers der mittleren Molmasse 600 g/mol und bestehend zu 50 Gew.-% aus Ethylenoxid- und zu 50 Gew.-% aus Propylenoxideinheiten, nach Stand der Technik hergestellt wurde. Die GPC-Analyse dieses Starters ist von zwei Peakmaxima bei ca. 600 g/mol für den freien Polyetheranteil und bei etwa 9.000 g/mol für das Polyethersiloxan gekennzeichnet. Nach Zuspeisung einer ersten Teilmenge Propylenoxid gemäß erfindungsgemäßem Verfahren verschieben sich beide Peakmaxima zu höheren Molmassen. Es wird ein Produkt 1 erhalten, in dem der freie Polyether auf eine mittlere Molmasse von etwa 2.700 g/mol, das Siliconpolyethercopolymere auf ein Maximum bei ca. 18.000 g/mol angewachsen ist. Bei weiterer Propylenoxidaddition setzt sich der Trend und das generelle Kettenwachstum aller reaktiven Spezies im System fort. Das Produkt 2 enthält den auf eine mittlere Molmasse von ca. 13.000 g/mol verlängerten freien Polyether und ein Siliconpolyethercopolymer mit Peakmaximum bei 22.000 g/mol und sehr hochmolekularen Copolymeranteilen mit mehr als 100.000 g/mol.

Das erfindungsgemäße Verfahren gestattet es erstmals, einen nach konventioneller Methode gewonnenen Siliconpolyether durch eine nachfolgende Alkoxylierungsreaktion grundlegend und unter Erhalt des Siloxangerüsts zu modifizieren.
Es wird somit ein Verfahren zur Alkoxylierung von Siliconpolyethercopolymeren zur Verfügung gestellt bei dem Doppelmetallcyanidkatalysatoren verwendet werden.
So lassen sich zum Beispiel Polysiloxan-Polyether-Copolymersysteme mit sehr viel längeren, evtl. funktionalisierten Polyetherketten synthetisieren. Darüber hinaus lässt sich das Massenverhältnis von freien Überschusspolyethern zum Siliconpolyethercopolymeren im Vergleich zum Ausgangs-Copolymeren variieren. In gleicher Weise lässt sich der chemische Aufbau des wahlweise freien oder an das Siloxan gebundenen Polyethers variieren und so zum Beispiel auch die mittlere Molmasse des Siliconpolyethercopolymers in Relation zur mittleren Molmasse des Polyetherüberschusses steuern.
Bei dem erfindungsgemäßen Verfahren werden somit Zusammensetzungen an Doppelmetallcyanidkatalysatoren alkoxyliert, die Siliconpolyethercopolymere enthalten, wobei Siliconpolyethercopolymer-Zusammensetzungen mit einer gegenüber den Edukten erhöhten mittleren Molmasse gebildet werden.
Es erfolgt bei dem erfindungsgemäßen Verfahren eine bevorzugte Alkoxylierung von Siliconpolyethercopolymeren in Zusammensetzungen, die freie Polyetherole enthalten, an Doppelmetallcyanidkatalysatoren, wobei der Aufbau der mittleren Molmasse des im Gemisch mit freiem Polyetherol eingesetzten Siliconpolyethercopolymers mindestens mit der gleichen Geschwindigkeit erfolgt wie der Aufbau der Molmasse des im Eduktgemisch vorhandenen freien Polyetherols.

Die bevorzugte Alkoxylierung der Siliconpolyethercopolymeren in Zusammensetzungen, die freie Polyetherole enthalten, zeigt, dass der Aufbau der mittleren Molmasse des im Gemisch mit freiem Polyetherol eingesetzten Siliconpolyethercopolymers mindestens mit der gleichen Reaktionswahrscheinlichkeit erfolgt wie der Aufbau der Molmasse des im Eduktgemisch vorhandenen freien Polyetherols. Der Aufbau der Siliconpolyethercopolymere erfolgt zumeist schneller als der Aufbau der Molmasse des Polyetherols.

Die Geschwindigkeit der Alkoxylierung ist erfindungsgemäß für alle an der Reaktion teilnehmenden Siliconpolyethercopolymere größer oder gleich der Geschwindigkeit der Alkoxylierung des Polyetherols.

Das neue Verfahren schafft neue Möglichkeiten der Einstellung des hydrophil/hydrophob-Verhältnisses und damit ganz neue Spielräume für die Entwicklung von Tensiden.

Ein besonderer Vorteil des erfindungsgemäßen Verfahrens ist ferner die große R obustheit des Alkoxylierungsprozesses, mit dem neue, hochmolekulare und hochfunktionalisierte Polyethersiloxane zugänglich gemacht werden. Die alkoxylierten Siliconpolyethercopolymere können damit höhermolekulare, komplex zusammengesetzte und hochfunktionalisierte, hydrophobe und hydrophile Strukturelemente aufweisen.

Das erfindungsgemäß beanspruchte Verfahren ermöglicht es, SiC-verknüpfte Polyethersiloxane unterschiedlichster Struktur, Molmasse und Molmassenverteilung, die mindestens eine reaktive Kohlenstoff-gebundene Hydroxylgruppe aufweisen, in Gegenwart eines DMC-Katalysators mit Epoxidmonomeren und gegebenenfalls weiteren Monomeren durch gegebenenfalls ringöffnende Alkoxylierungsreaktion zu kettenverlängerten, modifizierten Polyethersiloxanen umzusetzen.

Mit dem erfindungsgemäßen Verfahren gelingt es, ein elementares Grundbedürfnis in der Chemie höhermolekularer SiC-basierender Siliconpolyether-Copolymeren zu adressieren. Mit steigender Kettenlänge und einhergehend wachsendem Molekulargewicht büßen Allylpolyether verglichen mit entsprechenden kurzkettigen Polyethern stark an Reaktivität in der Hydrosilylierungsreaktion ein. Als Folge sinkt die Reaktionsgeschwindigkeit und die Erzielung quantitativen SiH-Umsatzes wird beträchtlich erschwert oder gar unmöglich. Der Zugang zu Polyethersiloxanen mit Polyetherkomponenten höheren Molekulargewichts ist über die übliche Anlagerung an SiH-Gruppen aufweisende Siloxane daher keinesfalls gegeben.

Es wird somit ein Verfahren zur Herstellung von Polyethersiloxane enthaltenden Alkoxylierungsprodukten mittels DMC-Katalyse zur Verfügung gestellt, bei dem ein oder mehrere epoxidfunktionelle Monomere gemäß Formel (II) einzeln oder im Gemisch mit weiteren Epoxidverbindungen der Formel (III) und gegebenenfalls weiteren Comonomeren wie Lactonen (IV), cyclischen Anhydriden (V), (VI), Kohlendioxid oder Oxetanen wahlweise blockartig oder statistisch an einen Organosiloxan-Kettenstarter der Formeln (I) oder (VII) mit mindestens einem reaktivem Wasserstoff addiert werden.
Weiteres Ziel des erfindungsgemäßen Verfahrens ist es, die von den Doppelmetallcyanid-Systemen bekannten Vorteile einer hohen Reaktionsgeschwindigkeit und des Verzichts auf die Katalysatordeaktivierung und -abtrennung zu erhalten und das hydrolyseempfindliche Siloxangerüst unter den Bedingungen der selektiven DMC-katalysierten Alkoxylierung zu konservieren.

Startverbindungen im Sinne des erfindungsgemäßen Verfahrens sind mindestens eine OH-Gruppe tragende Polyethersiloxane der Formel (I), 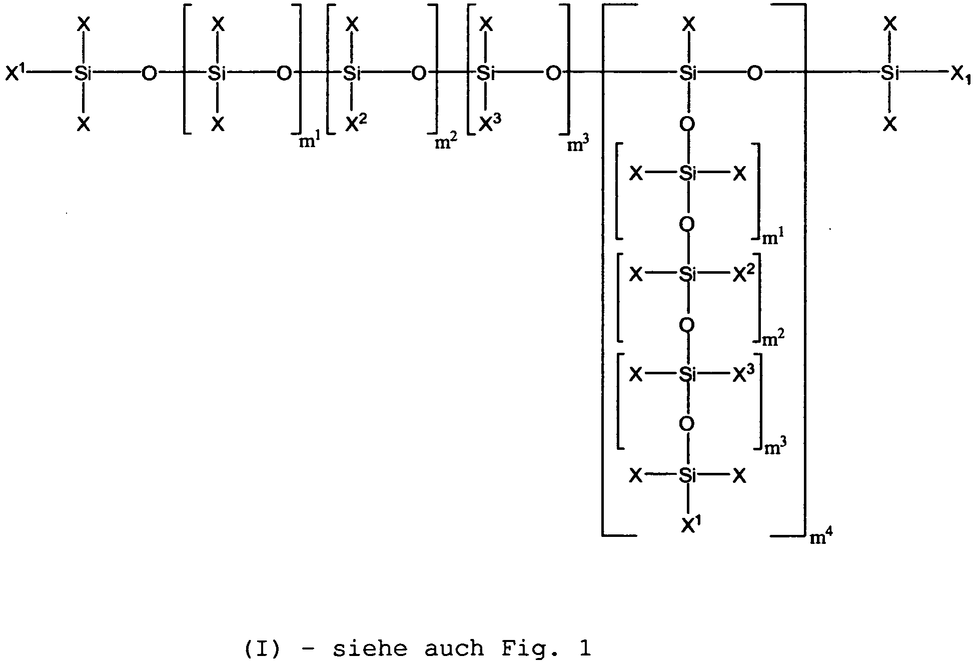 wobei
- m¹: eine ganze Zahl von 0 bis 500, vorzugsweise von 10 bis 200, insbesondere 15 bis 100,
- m²: eine ganze Zahl von 0 bis 60, vorzugsweise von 0 bis 30, insbesondere von 0 bis 25,
- m³: eine ganze Zahl von 0 bis 60, vorzugsweise von 0 bis 30, insbesondere von 0 bis 25,
- m⁴: eine ganze Zahl von 0 bis 10, vorzugsweise von 0 bis 3, ist,
- X: ein linearer, cyclischer oder verzweigter, aliphatischer oder aromatischer, gesättigter oder ungesättigter Kohlenwasserstoffrest mit 1 bis 20 C-Atomen ist, der ggfs. Heteroatome wie Sauerstoff, Stickstoff, Phosphor oder Schwefel enthalten kann, der jedoch vorzugsweise eine Methylgruppe ist,
- X¹: wahlweise X, X² oder X³ ist,
- X²: ein OH-funktioneller, ggfs. Ester- oder Carbonatmodifizierter Polyoxyalkylenrest der Formel (Ia) ist, 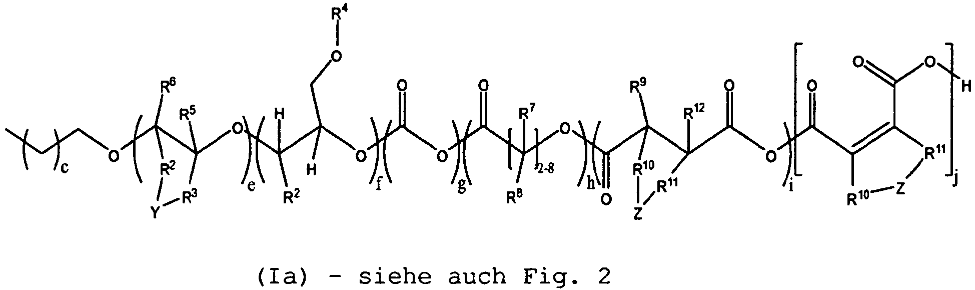
- X³: ein endständig veretherter Polyoxyalkylenrest der Formel (Ib) 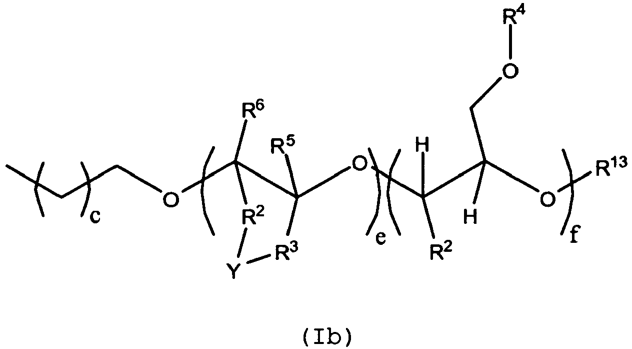 oder ein mit einer monofunktionellen Carbonsäure endständig veresterter Polyoxyalkylenrest der Formel (Ic) ist, 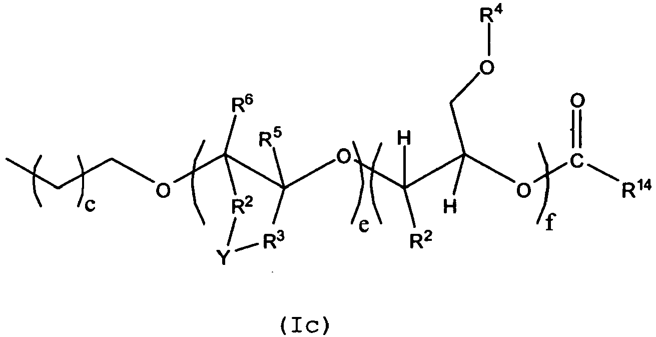 wobei
R⁴ einem linearen oder verzweigten Alkylrest von 1 bis 24 Kohlenstoffatomen, der an einen aromatischen oder cycloaliphatischen Rest gebunden ist, entspricht,
R⁷ und R⁸ unabhängig voneinander entweder Wasserstoff, Alkyl-, Alkoxy-, Aryl- oder Aralkylgruppen sind,
R⁹, R¹⁰, R¹¹ und R¹² sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann,
R¹³ ist wahlweise eine Alkylgruppe mit 1 bis 18 C-Atomen, vorzugsweise Methyl,
R¹⁴ ist ein gesättigter oder ein ein- oder mehrfach ungesättigter, entweder linearer oder verzweigter, aliphatischer oder aromatischer Kohlenwasserstoffrest mit 1-30 Kohlenstoffatomen, der seinerseits OH-Gruppen tragen kann, und der vorzugsweise ein Methylrest ist, und wobei
c eine ganze Zahl von 0 bis 24, vorzugsweise von 0 bis 12, besonders bevorzugt von 0 bis 8, ganz besonders bevorzugt von 0 bis 4 ist,
e eine ganze Zahl von größer als 5, bevorzugt 6 bis 500, besonders bevorzugt 6 bis 300 und insbesondere 6 bis 200 ist und
f, g, h, i und j ganze Zahlen von 0 bis 500, bevorzugt 0 bis 300, besonders bevorzugt 0 bis 200, insbesondere 0 bis 100 sind.

Die durch Formel (I) beschriebenen Polyethersiloxane schließen die prozessbedingt enthaltenen Anteile an freien Überschusspolyethern mit ein.

Die verschiedenen Monomereinheiten innerhalb der Siloxankette bzw. innerhalb der damit verknüpften Polyetherkette können untereinander wahlweise blockweise oder statistisch aufgebaut sein. Die in den hier angeführten Formeln wiedergegebenen Indexzahlen und die Wertebereiche der angegebenen Indizes verstehen sich als die Mittelwerte der möglichen statistischen Verteilung der tatsächlichen isolierten Strukturen und/oder deren Mischungen. Dies gilt auch für als solche an sich exakt wiedergegebenen Strukturformeln.

SiC-verknüpfte Polyethersiloxane der Formel (I) werden großtechnisch durch Edelmetall-katalysierte Hydrosilylierungsreaktionen der entsprechenden Wasserstoffsiloxane mit terminal ungesättigten, zum Beispiel Allylalkohol-basierenden Polyethern hergestellt. Derartige Polyether werden in einem separaten vorherigen Alkoxylierungsprozess nach Stand der Technik durch Alkoxylierung von Allylalkohol mit Alkylenoxiden und evtl. zusätzlichen Comonomeren, wodurch Ester- oder Carbonatgruppen in das Polyethergerüst eingebaut werden können, hergestellt. Die als Nebenprodukte in den technischen Polyethersiloxanen (I) enthaltenen freien Anteile an Überschusspolyethern beeinträchtigen die erfindungsgemäße DMC-katalysierte Alkoxylierungsreaktion nicht. Sind diese Überschusspolyether OH-funktionell, so fungieren sie ebenfalls als Kettenstarter für die Umsetzung mit Epoxidmonomeren im Rahmen des Alkoxylierungsprozesses.

Neben den SiC-verknüpften Polyethersiloxanen der Formel (I) können auch lineare, kettenendständig OH-funktionelle SiOC verknüpfte Polyethersiloxane, die durch direkte Alkoxylierung von SiOH-Gruppen tragenden α,ω-Dihydroxysiloxanen mit Epoxidmonomeren zugänglich sind und deren Herstellung in der nicht vorveröffentlichten Schrift DE 10 2008 002713.8 beschrieben wird, als Kettenstarter verwendet werden. In Bezug auf diese Kettenstarter ist der Offenbarungsgehalt der DE 10 2008 002713.8 vollumfänglich als Teil der Offenbarung dieser Anmeldung anzusehen.

Darüber hinaus eignen sich auch Hydroxylgruppen tragende Organosiloxane mit cyclischer Struktur gemäß Formel (VII) als Starter für die erfindungsgemäße DMC-katalysierte Alkoxylierung, 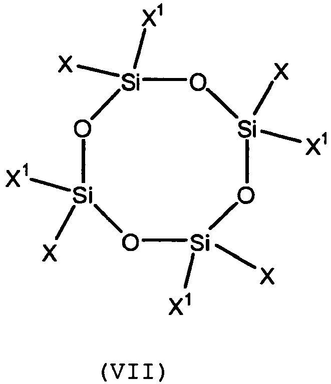 wobei X¹ in mindestens einem Fall pro Molekül dem OH-funktionellen organischen Rest X² entspricht. Die durch Formel (VII) beschriebenen cyclischen Copolymere schließen die prozessbedingt enthaltenen Anteile an freien Überschusspolyethern mit ein.

Als Epoxidmonomere können Alkylenoxide der allgemeinen Formel (II) eingesetzt werden, 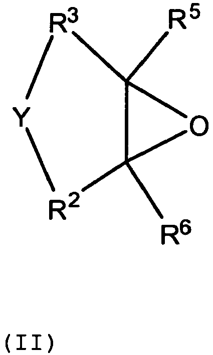 mit R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in Formel (II) R² oder R³ Wasserstoff. Besonders bevorzugt werden als Alkylenoxide Ethylenoxid, Propylenoxid, 1,2-oder 2,3-Butylenoxid, Isobutylenoxid, 1,2-Dodecenoxid, Styroloxid, Cyclohexenoxid (hier ist R²-R³ eine -CH₂CH₂CH₂CH₂-Gruppe, Y damit -CH₂CH₂-) oder Vinylcyclohexenoxid oder deren Mischungen eingesetzt. Die Kohlenwasserstoffreste R² und R³ gemäß Formel (II) können ihrerseits weiter substituiert sein und funktionelle Gruppen wie Halogene, Hydroxylgruppen oder Glycidyloxypropylgruppen tragen. Zu solchen Alkylenoxiden gehören Epichlorhydrin und 2,3-Epoxy-1-propanol. Auch Gemische von Epoxiden der Formel (II) können eingesetzt werden, und zwar beliebig blockartig oder gemischt.

Ebenfalls können Glycidylverbindungen wie Glycidylether und/oder Glycidylester der allgemeinen Formel (III), 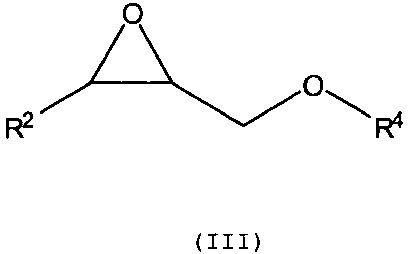 bei denen mindestens eine Glycidyloxypropyl-Gruppe über eine Ether- oder Esterfunktion an einen Rest R⁴, der ein linearer oder verzweigten Alkylrest von 1 bis 24 Kohlenstoffatomen oder ein aromatischer oder cycloaliphatischer Rest sein kann, gebunden ist, in Kombination mit den in Formel (II) dargestellten Alkylenoxiden verwendet werden. Zu dieser Klasse von Verbindungen gehören zum Beispiel Allyl-, Butyl-, 2-Ethylhexyl-, Cyclohexyl-, Benzyl-, C₁₂/C₁₄-Fettalkohol-, Phenyl, p-tert.-Butylphenyl- oder o-Kresylglycidylether. Bevorzugt eingesetzte Glycidylester sind zum Beispiel Glycidylmethacrylat, Glycidylacrylat oder Neodecansäureglycidylester. Ebenso einsetzbar sind polyfunktionelle Epoxidverbindungen wie zum Beispiel 1,2-Ethyl-, 1,4-Butyl- oder 1,6-Hexyldiglycidylether.

Die erfindungsgemäß einsetzbaren Alkylenoxide der Formel (II) können - gegebenenfalls in Kombination mit weiteren Epoxiden gemäß Formel (III) - unter den Bedingungen der DMC-katalysierten Alkoxylierung auch im Gemisch mit Lactonen der Formel (IV), 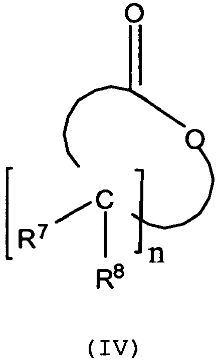 wobei n eine ganze Zahl von 2 bis 8 ist und R⁷ und R⁸ unabhängig voneinander entweder Wasserstoff, Alkyl-, Alkoxy-, Aryl- oder Aralkylgruppen darstellen. Als geeignete Lactone können in dem Zusammenhang beispielsweise ε-Caprolacton, δ-Valerolacton und γ-Butyrolacton sowie Gemische verschiedener Lactone verwendet werden. Bevorzugt ist die Verwendung von ε-Caprolacton als Comonomer. Während des Alkoxylierungsprozesses können die jeweiligen Epoxid- und Lactonmonomere in beliebiger Reihenfolge und variabler Menge nacheinander oder zeitlich parallel zu Polyetherestern mit blockartiger oder statistisch verteilter Sequenz der einzelnen Monomerbausteine copolymerisiert werden.

Alternativ oder zusätzlich zu Lactonen können auch gesättigte, ungesättigte oder aromatische cyclische Dicarbonsäureanhydride gemäß den Formeln (V) und (VI) als Comonomere neben den erfindungsgemäß einsetzbaren Epoxiden der Formel (II) und gegebenenfalls weiteren Epoxiden gemäß Formel (III) unter den Bedingungen der DMC-katalysierten Alkoxylierung eingesetzt werden, 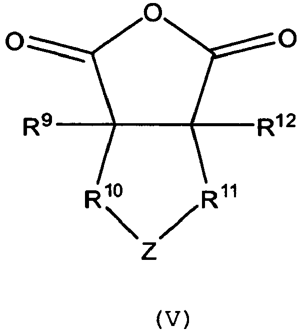 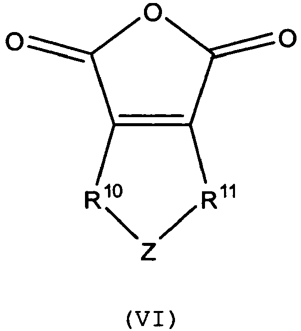 wobei R⁹, R¹⁰, R¹¹ und R¹² unabhängig voneinander entweder Wasserstoff, Alkyl-, Alkenyl-, Alkoxy-, Aryl- oder Aralkylgruppen darstellen. Der Kohlenwasserstoffrest kann cycloaliphatisch oder aromatisch über das Fragment Z verbrückt sein, wobei Z sowohl einen divalenten Alkylenals auch Alkenylenrest darstellen kann. Bevorzugt eingesetzte cyclische Anhydride sind Bernsteinsäureanhydrid, Oct(en)yl-, Dec(en)yl- und Dodec(en)ylbernsteinsäueanhydrid, Maleinsäureanhydrid, Phthalsäureanhydrid, Hexahydro-, Tetrahydro-, Dihydro-, Methylhexahydro- und Methyltetrahydrophthalsäureanhydrid. Während des Alkoxylierungsprozesses können die jeweiligen Anhydridmonomere in beliebiger Reihenfolge und variabler Menge nacheinander oder zeitlich parallel zum Epoxidfeed unter Ringöffnung zu Polyetherestern copolymerisiert werden. Auch Mischungen von Anhydriden gemäß Formel (V) und (VI) sind einsetzbar.

Wird die Alkoxylierung von Polyethersiloxanen der Formel (I) in Gegenwart von Kohlendioxid durchgeführt, gelingt die Herstellung carbonatgruppen-modifizierter Polyether bzw. Polyetherester durch Insertion von Kohlendioxid in die Polymerkette. Solche Umsetzungen finden bevorzugt in Autoklavreaktoren unter Überdruck und Kohlendioxidatmosphäre statt. Der Carbonatgehalt ist variabel und z.B. durch die Wahl der Temperatur- und Druckbedingungen während der Umsetzung steuerbar.

Zum Starten der Alkoxylierungsreaktion nach erfindungsgemäßem Verfahren wird das Startgemisch, bestehend aus einem oder mehreren OH-funktionellen Startverbindungen der Formeln (I) oder (VII) oder den in der nicht vorveröffentlichten Schrift DE 10 2008 002713.8 beschriebenen Polyethersiloxanen u n d dem Doppelmetallcyanid-Katalysator, der gegebenenfalls zuvor in einem Suspendiermittel aufgeschlämmt wurde, im Reaktor vorgelegt. Als Suspensionsmittel können entweder ein Polyether, ein Polyethersiloxan oder inerte Lösungsmittel benutzt werden oder vorteilhaft auch eine oder mehrere der zuvor genannten Startverbindungen, oder alternativ ein Gemisch der genannten Komponenten. Der vorgelegten Startmischung wird zumindest eine der Epoxidverbindungen gemäß Formel (II) oder (III) zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Das molare Verhältnis von Epoxid zu den reaktiven Gruppen des Starters, insbesondere den OH-Gruppen im Startgemisch, liegt in der Startphase dabei vorzugsweise bei 0,1 bis 300 zu 1, bevorzugt bei 0,2 bis 200 zu 1, insbesondere bei 0,4 bis 100 zu 1. Es kann vorteilhaft sein, wenn vor der Zugabe des Epoxids gegebenenfalls vorhandene, die Reaktion inhibierende Stoffe aus dem Reaktionsgemisch z.B. durch Destillation entfernt werden.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist.

Nach der Initialisierung der Reaktion werden je nach angestrebter Molmasse entweder gleichzeitig weitere Startverbindung und weiteres Epoxid oder nur weiteres Epoxid zudosiert. Alternativ kann auch ein beliebiges Gemisch von unterschiedlichen Epoxiden der Formeln (II) und (III) addiert werden. Die Epoxidmonomere gemäß den Formeln (II) oder (III) können in beliebiger Reihenfolge nacheinander addiert werden. Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan.

Das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, beträgt vorzugsweise 1 bis 10⁵ zu 1, insbesondere 1 bis 10⁴ zu 1.

Die Anlagerung der Epoxidverbindungen geschieht vorzugsweise bei einer Temperatur von 60 bis 250 °C, besonders bevorzugt bei einer Temperatur von 90 bis 160 °C. Der Druck beträgt dabei vorzugsweise 0,02 bar bis 100 bar, besonders bevorzugt 0,05 bis 20 bar und insbesondere von 0,2 bis 2 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.

Die für die Herstellung von estermodifizierten Polyethersiloxanen einsetzbaren Lactone (IV) oder cyclischen Anhydride (V) und (VI) können sowohl bereits in der Startphase dem Starter-Katalysator-Gemisch zugefügt als auch zu einem späteren Zeitpunkt parallel zur Epoxiddosierung zugeführt werden. Die genannten Comonomere können auch jeweils nacheinander alternierend mit Epoxiden in den Reaktor dosiert werden.
Das molare Verhältnis der Epoxidmonomere zu cyclischen Anhydriden ist dabei variabel. Üblicherweise werden mindenstens äquimolare Mengen Epoxidmonomere bezogen auf Anhydride eingesetzt. Bevorzugt ist die Verwendung der Epoxide in einem molaren Überschuss, um die vollständige Anhydridumsetzung zu gewährleisten. Lactone können während der Alkoxylierung wahlweise im stöchiometrischen Unterschuss oder Überschuss bezogen auf die Epoxidmonomere zugefügt werden.

Zur Herstellung von carbonatmodifizierten Polyethersiloxanen findet die Alkoxylierung in Gegenwart von entweder gasförmig oder als Trockeneis zugeführtem festen Kohlendioxid statt. Vorzugsweise wird Kohlendioxidgas verwendet, das sowohl bereits vor dem Start der Reaktion, also bereits während der Initialisierungsstufe, dem System aus Starter und DMC-Katalysator zugeführt werden kann, als auch während der nachfolgenden Phase des Zulaufs von Epoxidmonomeren und evtl. weiterer Comonomere. Um den Carbonatgehalt im Endprodukt zu erhöhen, ist es vorteilhaft, entsprechend dem Kohlendioxidverbrauch, erkennbar an der Druckabnahme im Autoklaven, im Verlaufe der Umsetzung weiteres Kohlendioxid kontinuierlich oder portionsweise zuzudosieren. Vorzugsweise geschieht die Reaktion bei Drücken von weniger als 100 bar, besonders bevorzugt bei weniger als 20 bar.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl batchweise als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Suspensionsmittel kann vor Beginn der Monomerdosierung gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Als DMC-Katalysator können alle bekannten DMC-Katalysatoren, vorzugsweise solche, die Zink und Kobalt aufweisen, bevorzugt solche, die Zinkhexacyanocobaltat(III) aufweisen, eingesetzt werden. Vorzugsweise werden die in US 5,158,922, US 20030119663, WO 01/80994 oder in den oben genannten Schriften beschriebenen DMC-Katalysatoren eingesetzt. Die Katalysatoren können amorph oder kristallin sein. Im Reaktionsgemisch liegt die Katalysatorkonzentration vorzugsweise bei > 0 bis 1.000 wppm (Massen-ppm), bevorzugt bei > 0 bis 500 wppm, besonders bevorzugt bei 0,1 bis 200 wppm und ganz besonders bevorzugt bei 1 bis 50 wppm. Diese Konzentration ist dabei bezogen auf die Gesamtmasse der entstehenden Siliconpolyether-Copolymersysteme.

Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignen sich insbesondere Starter der Formeln (I) oder (VII) oder die in der nicht vorveröffentlichten Schrift DE 10 2008 002713.8 beschriebenen Polyethersiloxane als Suspensionsmittel. Bevorzugt wird aber auf eine Suspendierung verzichtet.

Durch das erfindungsgemäße Verfahren werden hochmolekulare, Polyether-Siloxan-Copolymersysteme bereitgestellt, die sich dadurch auszeichnen, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere des Typs (II) und (III) und Lactone nach Formel (IV) können beliebig blockartig aneinander gereiht oder statistisch in die Polymerkette eingebaut sein. Die durch die Reaktion unter Ringöffnung der Reaktionskomponenten der Formeln (II) bis (VI) in die entstehende Polymerkette eingefügten Fragmente sind in ihrer Sequenz untereinander frei permutierbar, mit der Einschränkung, dass cyclische Anhydride nach Formel (V) und (VI) sowie Kohlendioxid statistisch insertiert, also nicht in homologen Blöcken, in der Polyetherstruktur vorliegen.

Als Reaktoren für die erfindungsgemäß beanspruchte Umsetzung können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

Bei der Dosierung der Edukte ist eine gute Verteilung der an der chemischen Umsetzung beteiligten Stoffe, d.h. der Epoxidmonomere, Starter, DMC-Katalysator und gegebenenfalls Suspensionsmittel oder Comonomere wie Lactone, Anhydride oder Kohlendioxid notwendig.

Ein weiterer Gegenstand der Erfindung sind die nach den beschriebenen Verfahren hergestellten Siliconpolyethercopolymere, sowie daraus herstellte Kunststoffartikel und die Siliconpolyethercopolymere enthaltenden Tensidzusammensetzungen einschließlich deren Verwendung.

Weitere Gegenstände der Erfindung werden durch die Ansprüche beschrieben. Der Offenbarungsgehalt der Ansprüche ist vollumfänglich ein Bestandteil der Beschreibung.

Das erfindungsgemäße Verfahren zur DMC-katalysierten Alkoxylierung von Polyethersiloxanen mit reaktivem Wasserstoff wird nachfolgend beispielhaft beschrieben, ohne dass die Erfindung als auf diese beispielhaften Ausführungsformen beschränkt angesehen werden kann.
Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

OH-Zahlen wurden nach der Standard-Acetylierungsmethode (Phthalsäureanhydrid) analysiert. Die GPC-Analysen wurden in THF als Lösemittel gegen Polypropylenglykol als Standard durchgeführt.

Die als Edukte in den Beispielen 1-3 und 5 verwendeten und durch Hydrosilylierungsreaktion gewonnenen Polyethersiloxane enthalten herstellungsbedingt einen Anteil an Überschuss-Polyether, der zur Vervollständigung der Si-H-Reaktion benötigt wird. Der Anteil des mitverwendeten Überschuss-Polyethers ist bei den jeweiligen Einsatzmengen der Beispiele vermerkt.

### Beispiel 1:

Als Kettenstarter wird ein Polyethersiloxan der Formel (I) mit der Struktur m¹ = 20, m² = 5, m³ = m⁴ = 0, X = X¹ = Methyl eingesetzt, das zuvor durch Hydrosilylierung eines Wasserstoffsiloxans mit einem Überschuss eines OH-terminierten Allylpolyethers der mittleren Molmasse 800 g/mol und bestehend zu 36 Gew.-% aus Ethylenoxid- und zu 64 Gew.-% aus Propylenoxideinheiten, nach Stand der Technik hergestellt wurde.

In einem 3 Liter Autoklaven werden 200,0 g dieses Polyethersiloxans (enthaltend 15-20 Gew.-% Überschuss-Polyether der mittleren Molmasse 800 g/mol) und 0,10 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 40,0 g Propylenoxid zugeführt. Nach 15 min und Anspringen der Reaktion (erfolgter Reaktorinnendruckabfall) werden weitere 760,0 g Propylenoxid kontinuierlich und unter Kühlen innerhalb von 2 h bei 130 °C und max. 0,6 bar Reaktorinnendruck absolut zudosiert. An die 30 minütige Nachreaktion bei 130 °C schließt sich die Entgasungsstufe an. Dabei werden flüchtige Anteile wie restliches Propylenoxid im Vakuum abdestilliert. Das fertige mittelviskose und farblose Polyethersiloxan-Copolymere wird auf unter 80 °C abgekühlt und aus dem Reaktor abgelassen.

Das Produkt enthält im Mittel pro Polyethersiloxan-Molekül 5 lange Polyetherketten, chemisch über jeweils eine SiC-Bindung an das Siloxangerüst gebunden, und hat eine OH-Zahl von 11,1 mg KOH/g. Das GPC zeigt eine multimodale Kurve mit Maxima bei etwa 5.000, 9.000 und 20.000 g/mol, eine massenmittlere Molmasse M_{w} von 14.300 g/mol und eine Polydispersität M_{w}/Mₙ von 1,63.

### Beispiel 2:

Als Kettenstarter wird ein durch Hydrosilylierung hergestelltes Polyethersiloxan der Struktur m¹ = 61,5; m² = 1,6; m³ = 4,9; m⁴ = 0, X = X¹ = Methyl eingesetzt, wobei ein Gemisch von einem terminal OH-funktionellen und zwei Methyl-verkappten Allylpolyethern verwendet wurde, dessen Zusammensetzung wie folgt ist:
a) 18 Gew.-% Ethylenoxid, 82 Gew.-% Propylenoxid, 1.400 g/mol, R¹³ in Formel (Ib) = Methyl,
b) 74 Gew.-% Ethylenoxid, 26 Gew.-% Propylenoxid, 3.800 g/mol, R¹³ in Formel (Ib) = Methyl,
c) 42 Gew.-% Ethylenoxid, 58 Gew.-% Propylenoxid, 3.800 g/mol
im Massenverhältnis 41:17:42.

In einem 3 Liter Autoklaven werden 162,0 g dieses Polyethersiloxans (enthaltend etwa 20 Gew.-% Überschuss-Polyethermischung) und 0,024 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 20,0 g Propylenoxid zugeführt. Nach 12 min und Anspringen der Reaktion werden weitere 62,0 g Propylenoxid kontinuierlich und unter Kühlen innerhalb von 40 min bei 130 °C und max. 0,3 bar Reaktorinnendruck absolut zudosiert. Nach 40 min Nachreaktion bei 130 °C wird entgast. Dabei werden flüchtige Anteile wie restliches Propylenoxid im Vakuum abdestilliert. Das fertige mittelviskose und farblose Polyethersiloxan-Copolymere wird auf unter 80 °C abgekühlt und aus dem Reaktor abgelassen.
Das Produkt enthält im Mittel pro Polyethersiloxan-Molekül 6,5 lange Polyetherketten, chemisch über jeweils eine SiC-Bindung an das Siloxangerüst gebunden, und hat eine OH-Zahl von 4,9 mg KOH/g. Das GPC zeigt eine multimodale Kurve mit Maxima bei etwa 1.400, 9.000 und 20.000 g/mol, eine massenmittlere Molmasse M_{w} von 16.300 g/mol und eine Polydispersität M_{w}/Mₙ von 2,32.

### Beispiel 3:

Als Kettenstarter wird ein durch Hydrosilylierung hergestelltes Polyethersiloxan der Struktur m¹ = 61,5; m² = 6,5; m³ = m⁴ = 0, X = X¹ = Methyl eingesetzt, wobei ein Gemisch von drei terminal OH-funktionellen Allylpolyethern verwendet wurde, dessen Zusammensetzung wie folgt ist:
a) 10 Gew.-% Ethylenoxid, 90 Gew.-% Propylenoxid, 1.500 g/mol,
b) 58 Gew.-% Ethylenoxid, 42 Gew.-% Propylenoxid, 1.300 g/mol,
c) 42 Gew.-% Ethylenoxid, 58 Gew.-% Propylenoxid, 3.800 g/mol
im Massenverhältnis 36:6:58.

In einem 3 Liter Autoklaven werden 159,0 g dieses Polyethersiloxans (enthaltend etwa 20 Gew.-% Überschuss-Polyethermischung) und 0,031 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 21,0 g Propylenoxid zugeführt. Nach 12 min und Anspringen der Reaktion werden weitere 177,0 g Propylenoxid kontinuierlich und unter Kühlen innerhalb von 45 min bei 130 °C und max. 0,5 bar Reaktorinnendruck absolut zudosiert. Nach 35 min Nachreaktion bei 130 °C wird entgast. Dabei werden flüchtige Anteile wie restliches Propylenoxid im Vakuum abdestilliert. Das fertige mittelviskose und farblose Polyethersiloxan-Copolymere wird auf unter 80 °C abgekühlt und aus dem Reaktor abgelassen.

Das Produkt enthält im Mittel pro Polyethersiloxan-Molekül 6,5 lange Polyetherketten, chemisch über jeweils eine SiC-Bindung an das Siloxangerüst gebunden, und hat eine OH-Zahl von 10,8 mg KOH/g. Das GPC zeigt eine bimodale Kurve mit Maxima bei etwa 8.000 und 30.000 g/mol, eine massenmittlere Molmasse M_{w} von 8.600 g/mol und eine Polydispersität M_{w}/Mₙ von 2,36.

### Beispiel 4:

Als Kettenstarter wird ein lineares Polyethersiloxan eingesetzt, das zuvor durch Propoxylierung eines α,ω-Dihydroxypolydimethylsiloxans mit einer mittleren Kettenlänge von 51 Si(CH₃)₂O-Einheiten hergestellt wurde, und dessen beide OH-terminierte Polyetherketten eine mittlere Molmasse von je ca. 600 g/mol aufweisen.

In einem 3 Liter Autoklaven werden 250,0 g dieses Polyethersiloxans und 0,023 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 36,0 g Propylenoxid zugeführt. Nach 15 min und Anspringen der Reaktion werden weitere 485,0 g Propylenoxid kontinuierlich und unter Kühlen innerhalb von 1,5 h bei 130 °C und max. 0,5 bar Reaktorinnendruck absolut zudosiert. An die 30 minütige Nachreaktion bei 130 °C schließt sich die Entgasungsstufe an. Dabei werden flüchtige Anteile wie restliches Propylenoxid im Vakuum abdestilliert. Das fertige mittelviskose und leicht trübe Polyethersiloxan-Copolymere wird auf unter 80 °C abgekühlt und aus dem Reaktor abgelassen.

Das Produkt enthält im Mittel pro Polyethersiloxan-Molekül 2 lange terminale Polyetherketten, chemisch über jeweils eine SiOC-Bindung an das Siloxangerüst gebunden, und hat eine OH-Zahl von 7,2 mg KOH/g. Das GPC zeigt ein Maximum bei etwa 15.000 g/mol und eine Polydispersität M_{w}/Mₙ von 1,42.

### Beispiel 5:

Als Kettenstarter wird ein Polyethersiloxan der Formel (I) mit der Struktur m¹ = 42, m² = 6, m³ = m⁴ = 0, X = X¹ = Methyl eingesetzt, das zuvor durch Hydrosilylierung des entsprechenden Wasserstoffsiloxans mit einem Überschuss eines OH-terminierten Allylpolyethers der mittleren Molmasse 600 g/mol und bestehend zu 50 Gew.-% aus Ethylenoxid- und zu 50 Gew.-% aus Propylenoxideinheiten, nach Stand der Technik hergestellt wurde.

In einem 3 Liter Autoklaven werden 150,0 g dieses Polyethersiloxans (enthaltend 15-20 Gew.-% Überschuss-Polyether der mittleren Molmasse 600 g/mol) und 0,16 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 40,0 g Propylenoxid zugeführt. Nach 15 min und Anspringen der Reaktion werden zunächst weitere 296 g Propylenoxid (Probenahme, Produkt 1), dann weitere 2.250 g Propylenoxid kontinuierlich und unter Kühlen innerhalb von 3,45 h bei 130 °C und max. 0,6 bar Reaktorinnendruck absolut zudosiert. An die 30 minütige Nachreaktion bei 130 °C schließt sich die Entgasungsstufe an. Dabei werden flüchtige Anteile wie restliches Propylenoxid im Vakuum abdestilliert. Das fertige mittelviskose und gelbliche Polyethersiloxan-Copolymere (Produkt 2) wird auf unter 80 °C abgekühlt und aus dem Reaktor abgelassen.
Das Produkt hat eine OH-Zahl von 4,2 mg KOH/g. Das GPC (Abb. 1) zeigt eine multimodale Kurve, deren Maxima sich im Verlaufe der Alkoxylierungsreaktion sich kontinuierlich zu höheren Molmassen verschieben. Die massenmittlere Molmasse M_{w} des Endprodukts (Produkt 2) beträgt 35.450 g/mol, die Polydispersität M_{w}/Mₙ von 1,6. Die Abb. 1 zeigt die Veränderung der GPC-Analyse im Reaktionsverlauf. Alle Peak-Maxima wandern entlang der X-Achse hin zu höheren mittleren Molmassen. Eine Bevorzugung bei der Alkoxylierung gemäß Catch-Up-Kinetik, wie für die kurzkettigen Polyetherole zu erwarten gewesen wäre, ist nicht zu erkennen. Auf die "Verfälschung" bedingt durch die bei GPC-Analysen standardisierte logarithmische Darstellung der Molmassen-Skala sei nur am Rande hingewiesen.

## Patentansprüche

1. Verfahren zur Alkoxylierung von SiC-verknüpften Siliconpolyethercopolymeren, die mindestens eine reaktive Kohlenstoff-gebundene Hydroxylgruppe aufweisen, in Zusammensetzungen enthaltend SiC-verknüpfte Siliconpolyethercopolymere, die mindestens eine reaktive Kohlenstoff-gebundene Hydroxylgruppe aufweisen, und freie Polyetherole, wobei der Aufbau der mittleren Molmasse des im Gemisch mit freiem Polyetherol eingesetzten Siliconpolyethercopolymers mindestens mit der gleichen Geschwindigkeit erfolgt wie der Aufbau der Molmasse des im Eduktgemisch vorhandenen freien Polyetherols, **dadurch gekennzeichnet, dass** die SiC-verknüpften Siliconpolyethercopolymeren, die mindestens eine reaktive Kohlenstoff-gebundene Hydroxylgruppe aufweisen, in Gegenwart eines Doppelmetallcyanid-Katalysators mit Epoxidmonomeren und gegebenenfalls weiteren Monomeren zu kettenverlängerten, modifizierten Siliconpolyethercopolymeren umgesetzt werden.

2. Verfahren zur Herstellung von Siliconpolyethercopolymere enthaltenden Alkoxylierungsprodukten gemäß Anspruch 1 mittels Doppelmetallcyanid-Katalyse, bei dem ein oder mehrere epoxidfunktionelle Monomere gemäß Formel (II) 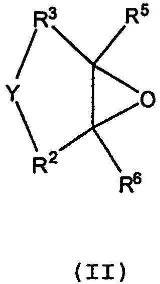 wobei
R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest sein kann, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann und Y kann nicht vorhanden sein, oder aber eine Methylenbrücke mit 1 oder 2 Methyleneinheiten sein kann, einzeln oder im Gemisch mit weiteren Epoxidverbindungen und gegebenenfalls weiteren Comonomeren wie Lactonen cyclischen Anhydriden, Kohlendioxid oder Oxetanen wahlweise blockartig oder statistisch an ein Siliconpolyethercopolymer der Formeln (I) 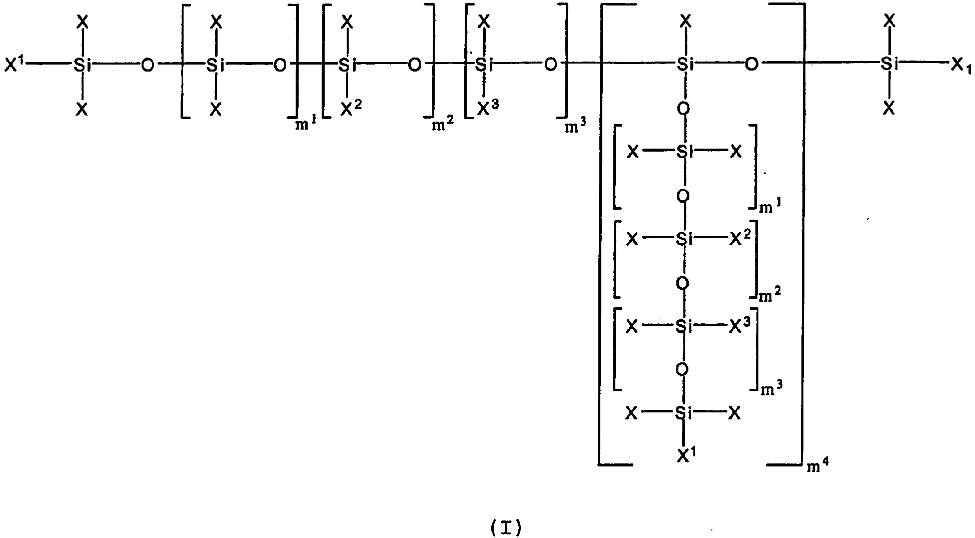 oder (VII) 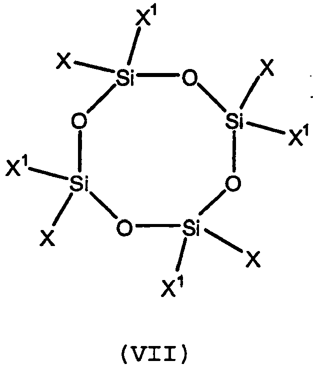
mit mindestens einem reaktivem Wasserstoff addiert werden, wobei
m¹ eine ganze Zahl von 0 bis 500,
m² eine ganze Zahl von 0 bis 60,
m³ eine ganze Zahl von 0 bis 60,
m⁴ eine ganze Zahl von 0 bis 10, ist,
X ein linearer, cyclischer oder verzweigter, aliphatischer oder aromatischer, gesättigter oder ungesättigter Kohlenwasserstoffrest mit 1 bis 20 C-Atömen ist, der ggfs. Heteroatome wie Sauerstoff, Stickstoff, Phosphor oder Schwefel enthalten kann, der jedoch vorzugsweise eine Methylgruppe ist,
X¹ wahlweise X, X² oder X³ ist,
X² ein OH-funktioneller, ggfs. Ester- oder Carbonatmodifizierter Polyoxyalkylenrest der Formel (Ia) ist, 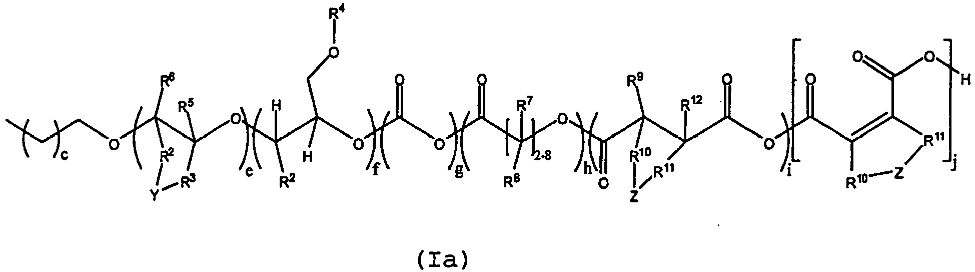
X³ ein endständig veretherter Polyoxyalkylenrest der Formel (Ib), 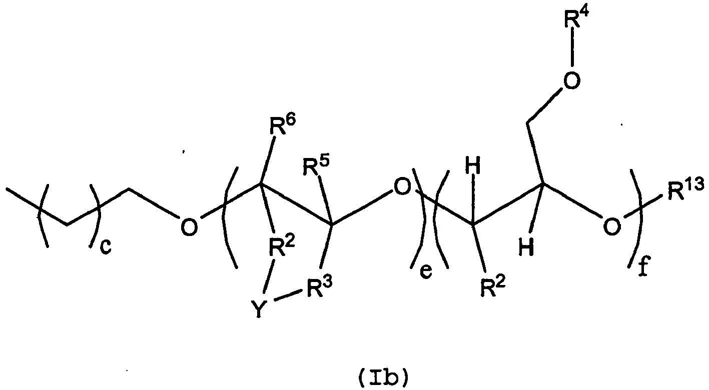 oder ein mit einer monofunktionellen Carbonsäure endständig veresterter Polyoxyalkylenrest der Formel (Ic) ist 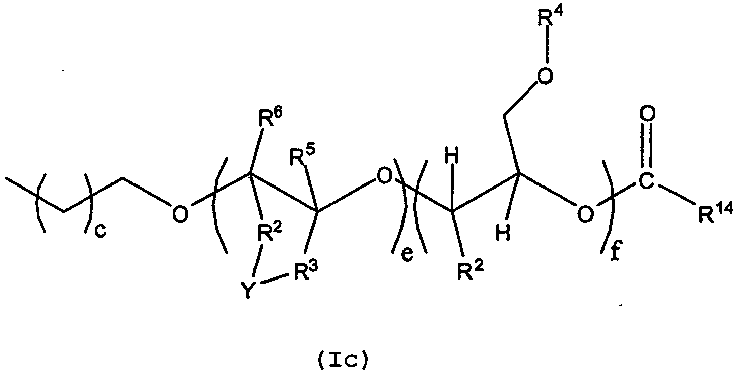 wobei
R⁴ einem linearen oder verzweigten Alkylrest von 1 bis 24 Kohlenstoffatomen entspricht, der an einen aromatischen oder cycloaliphatischen Rest gebunden ist,
R⁷ und R⁸ unabhängig voneinander entweder Wasserstoff, Alkyl-, Alkoxy-, Aryl- oder Aralkylgruppen sind, sowie
R⁹, R¹⁰, R¹¹ und R¹² unabhängig voneinander entweder Wasserstoff, Alkyl-, Alkenyl-, Alkoxy-, Aryl- oder Aralkylgruppen sind und der Kohlenwasserstoffrest cycloaliphatisch oder aromatisch über das Fragment Z verbrückt sein kann, wobei Z sowohl einen divalenten Alkylenals auch Alkenylenrest darstellen und
R¹³ wahlweise eine Alkylgruppe mit 1 bis 18 C-Atomen, vorzugsweise Methyl ist, wobei
R¹⁴ ein gesättigter oder ein ein- oder mehrfach ungesättigter, entweder linearer oder verzweigter, aliphatischer oder aromatischer Kohlenwasserstoffrest mit 1-30 Kohlenstoffatomen ist, der seinerseits OH-Gruppen tragen kann, und der vorzugsweise ein Methylrest ist, und wobei
c eine ganze Zahl von 0 bis 24,
e eine ganze Zahl größer gleich 5 ist, und
f, g, h, i und j ganze Zahlen von 0 bis 500 sind.

3. Siliconpolyethercopolymere und deren Zusammensetzungen, hergestellt nach einem der Verfahren gemäß den Ansprüchen 1 oder 2.

4. Tensidzusammensetzung enthaltend Siliconpolyethercopolymere hergestellt nach einem der Verfahren gemäß den Ansprüchen 1 oder 2.

5. Kunststoffartikel enthaltend Siliconpolyethercopolymere hergestellt nach einem der Verfahren gemäß den Ansprüchen 1 oder 2.

6. Verwendung der nach einem der Verfahren gemäß den Ansprüchen 1 oder 2 hergestellten alkoxylierten, gegebenenfalls weiter funktionalisierten Siliconpolyethercopolymeren als Tenside.

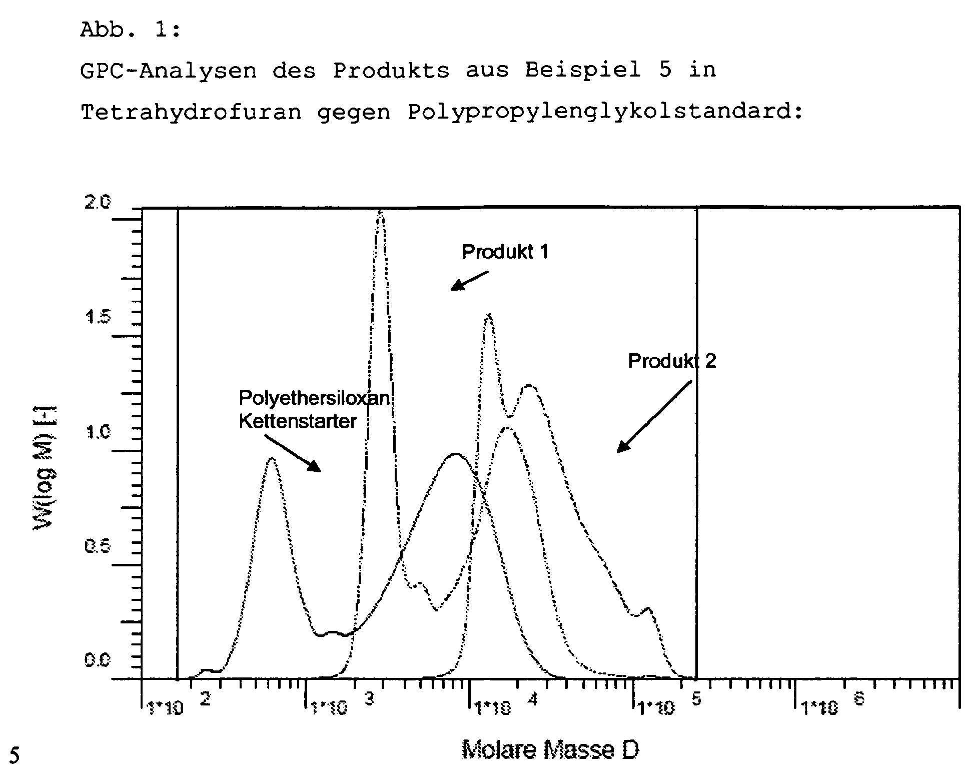

## Claims

1. Process for the alkoxylation of SiC-bonded silicone-polyether copolymers having at least one reactive carbon-bonded hydroxyl group in compositions comprising SiC-bonded silicone-polyether copolymers having at least one reactive carbon-bonded hydroxyl group and free polyetherols, wherein the increase in the average molar mass of the silicone-polyether copolymer used in admixture with free polyetherol occurs at at least the same rate as the increase in the molar mass of the free polyetherol present in the starting mixture, **characterized in that** the SiC-bonded silicone-polyether copolymers having at least one reactive carbon-bonded hydroxyl group are reacted in the presence of a double metal cyanide catalyst with epoxide monomers and, if appropriate, further monomers to form chain-extended, modified silicone-polyether copolymers.

2. Process for preparing alkoxylation products according to Claim 1 containing silicone-polyether copolymers by means of double metal cyanide catalysis, wherein one or more epoxide-functional monomers of the formula (II) 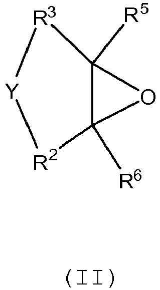 where
R² or R³ and R⁵ or R⁶ can each, independently of one another, be H or a saturated or either monounsaturated or polyunsaturated, either monovalent or polyvalent hydrocarbon radical which may be further substituted, with the radicals R⁵ or R⁶ being a monovalent hydrocarbon radical and the hydrocarbon radical can be cycloaliphatically bridged via the fragment Y and Y can be absent or can be a methylene bridge having 1 or 2 methylene units, are added either individually or in admixture with further epoxide compounds and, if appropriate, further comonomers such as lactones, cyclic anhydrides, carbon dioxide or oxetanes, either blockwise or randomly onto a silicone-polyether copolymer of the formula (I) 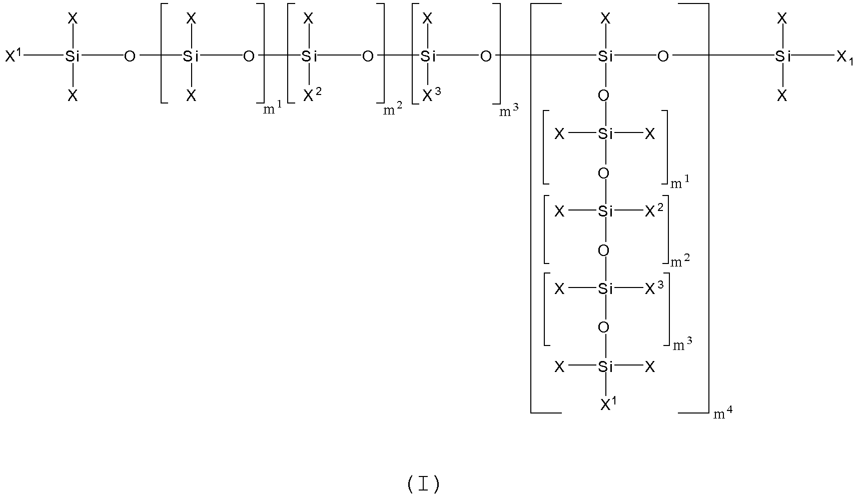 or (VII) 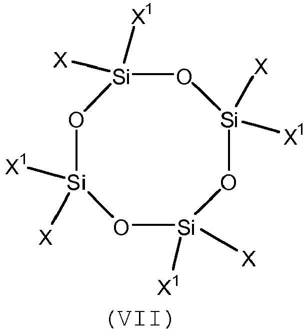 having at least one reactive hydrogen atom, where
m¹ is an integer from 0 to 500,
m² is an integer from 0 to 60,
m³ is an integer from 0 to 60,
m⁴ is an integer from 0 to 10,
X is a linear, cyclic or branched, aliphatic or aromatic, saturated or unsaturated hydrocarbon radical which has from 1 to 20 carbon atoms and may optionally contain heteroatoms such as oxygen, nitrogen, phosphorus or sulphur but is preferably a methyl group,
X¹ can be either X, X² or X³,
X² is an OH-functional, optionally ester- or carbonate-modified polyoxyalkylene radical of the formula (Ia), 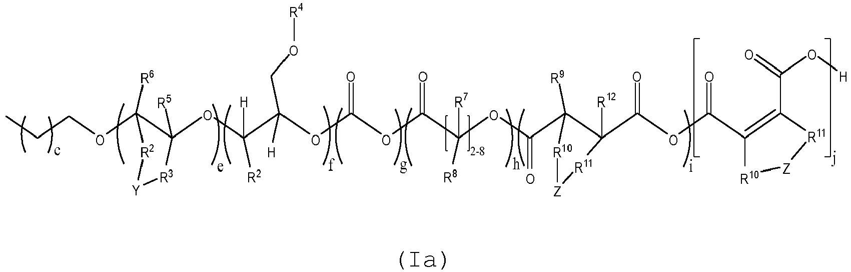
X³ is a terminally etherified polyoxyalkylene radical of the formula (Ib) 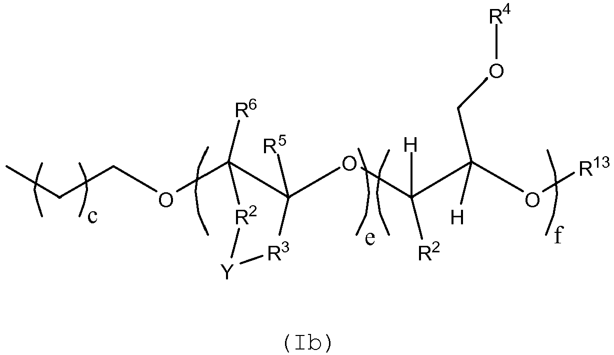 or a polyoxyalkylene radical of the formula (Ic) which has been terminally esterified with a monofunctional carboxylic acid, 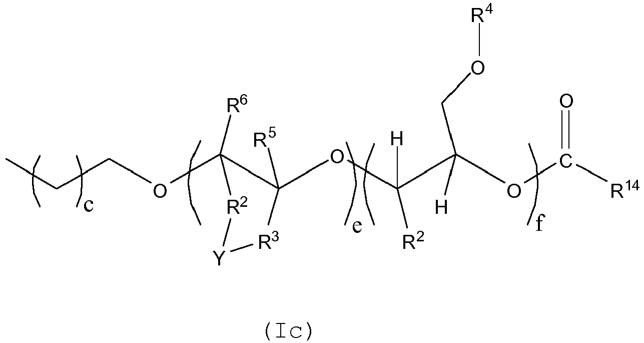 where
R⁴ is a linear or branched alkyl radical which has from 1 to 24 carbon atoms and is bound to an aromatic or cycloaliphatic radical,
R⁷ and R⁸ are each, independently of one another, either hydrogen or an alkyl, alkoxy, aryl or aralkyl group,
R⁹, R¹⁰, R¹¹ and R¹² are each, independently of one another, either hydrogen or an alkyl, alkenyl, alkoxy, aryl or aralkyl group, with the hydrocarbon radical being able to be cycloaliphatically or aromatically bridged via the fragment Z, where Z can be either a divalent alkylene radical or alkenylene radical,
R¹³ can be an alkyl group having from 1 to 18 carbon atoms, preferably methyl,
R¹⁴ is a saturated or monounsaturated or polyunsaturated, either linear or branched, aliphatic or aromatic hydrocarbon radical which has 1-30 carbon atoms and may bear OH groups and is preferably a methyl radical, and
c is an integer from 0 to 24,
e is an integer greater than or equal to 5, and
f, g, h, i and j are integers from 0 to 500.

3. Silicone-polyether copolymers and compositions thereof prepared by a process according to either of Claims 1 and 2.

4. Surfactant composition containing silicone-polyether copolymers prepared by a process according to either of Claims 1 and 2.

5. Plastic article containing silicone-polyether copolymers prepared by a process according to either of Claims 1 and 2.

6. Use of the alkoxylated, if appropriate further functionalized silicone-polyether copolymers prepared by a process according to either of Claims 1 and 2 as surfactants.

## Revendications

1. Procédé pour l'alcoxylation de copolymères de silicium-polyéther liés par SiC, qui présentent au moins un groupe hydroxyle réactif lié au carbone, dans des compositions contenant des copolymères de silicium-polyéther liés par SiC, qui présentent au moins un groupe hydroxyle réactif lié au carbone, et des polyétherols libres, le développement de la masse molaire moyenne du copolymère de silicium-polyéther utilisé en mélange avec le polyétherol libre se produisant au moins à la même vitesse que le développement de la masse molaire du polyétherol libre présent dans le mélange de départ, **caractérisé en ce que** les copolymères de silicium-polyéther liés par SiC, qui présentent au moins un groupe hydroxyle réactif lié au carbone, sont transformés en présence d'un catalyseur de type cyanure double métallique avec des monomères de type époxyde et le cas échéant d'autres monomères en copolymères de silicium-polyéther modifiés, à chaîne allongée.

2. Procédé pour la préparation de produits d'alcoxylation contenant des copolymères de silicium-polyéther selon la revendication 1 par catalyse de type cyanure double métallique, dans lequel un ou plusieurs monomères à fonctionnalité époxyde selon la formule (II) 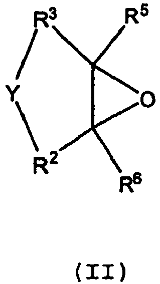 où
R² ou R³ ainsi que R⁵ ou R⁶ peuvent représenter, de manière identique ou également indépendamment l'un de l'autre, H ou un radical hydrocarboné, saturé ou le cas échéant monoinsaturé ou polyinsaturé, également substitué davantage, le cas échéant monovalent ou polyvalent, où, pour les radicaux R⁵ ou R⁶, il est vrai qu'ils représentent un radical hydrocarboné monovalent, le radical hydrocarboné pouvant former un pont cycloaliphatique via le fragment Y, Y pouvant être absent ou encore représenter un pont méthylène comprenant 1 ou 2 unités méthylène,
seuls ou en mélange avec d'autres composés de type époxyde et le cas échéant d'autres comonomères, tels que des lactones d'anhydrides cycliques, le dioxyde de carbone ou des oxétanes, sont additionnés, au choix de manière séquencée ou statistique, sur un copolymère de silicium-polyéther des formules (I) 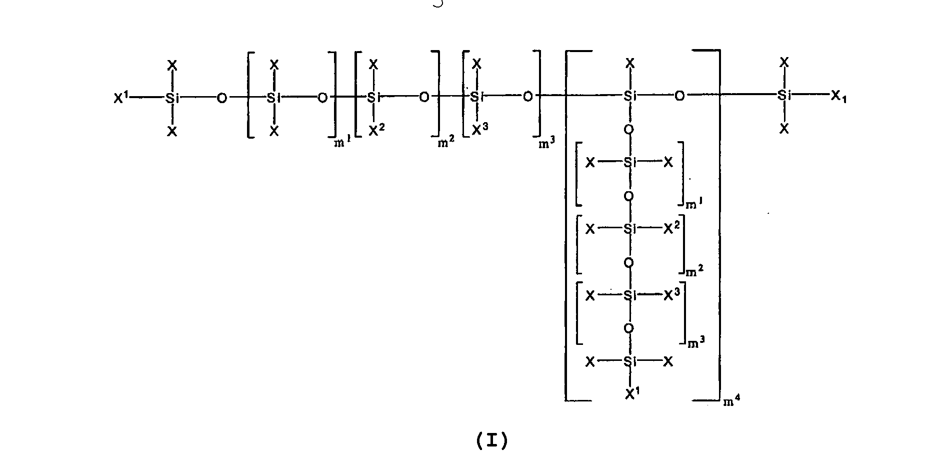 ou (VII) 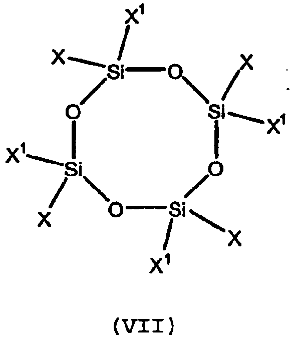 présentant au moins un hydrogène réactif,
m¹ valant un nombre entier de 0 à 500,
m² valant un nombre entier de 0 à 60,
m³ valant un nombre entier de 0 à 60,
m⁴ valant un nombre entier de 0 à 10,
X représentant un radical hydrocarboné linéaire, cyclique ou ramifié, aliphatique ou aromatique, saturé ou insaturé comprenant 1 à 20 atomes de carbone, qui peut le cas échéant contenir des hétéroatomes tels que l'oxygène, l'azote, le phosphore ou le soufre, qui est cependant de préférence un groupe méthyle,
X¹ représentant, au choix, X, X² ou X³,
X² représentant un radical polyoxyalkylène à fonctionnalité OH, le cas échéant modifié par ester ou carbonate, de formule (Ia), 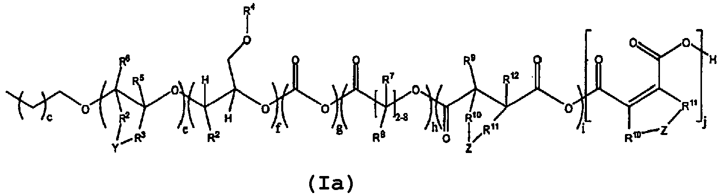
X³ représentant un radical polyoxyalkylène éthérifié en position terminale de formule (Ib), 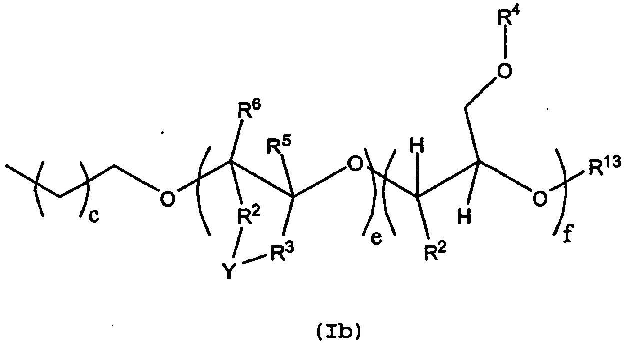 ou un radical polyoxyalkylène estérifié en position terminale par un acide carboxylique monofonctionnel de formule (Ic) 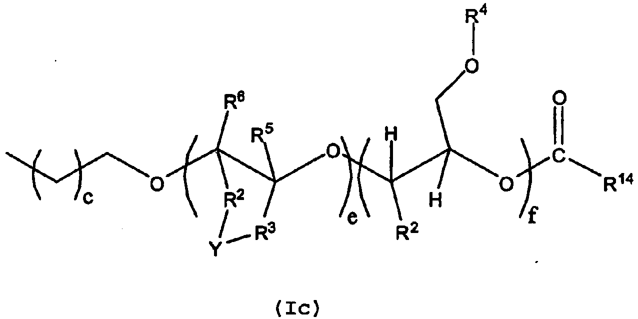 où
R⁴ correspond à un radical alkyle linéaire ou ramifié comprenant 1 à 24 atomes de carbone, qui est lié à un radical aromatique ou cycloaliphatique,
R⁷ et R⁸ représentent, indépendamment l'un de l'autre, soit hydrogène, soit des groupes alkyle, alcoxy, aryle ou aralkyle, ainsi que
R⁹, R¹⁰, R¹¹ et R¹² représentent, indépendamment les uns des autres, soit hydrogène, soit des groupes alkyle, alcényle, alcoxy, aryle ou aralkyle et le radical hydrocarboné pouvant former un pont cycloaliphatique ou aromatique via le fragment Z et Z pouvant représenter un radical alkylène ainsi que alcénylène divalent,
R¹³ représente au choix un groupe alkyle comprenant 1 à 18 atomes de carbone, de préférence méthyle ;
R¹⁴ représentant un radical hydrocarboné saturé ou monoinsaturé ou polyinsaturé, linéaire ou ramifié, aliphatique ou aromatique comprenant 1-30 atomes de carbone, qui peut porter à son tour des groupes OH et qui est de préférence un radical méthyle
c valant un nombre entier de 0 à 24,
e valant un nombre entier supérieur à 5 et
f, g, h, i et j valant des nombres entiers de 0 à 500.

3. Copolymères de silicium-polyéther et leurs compositions, préparés selon un des procédés selon la revendication 1 ou 2.

4. Composition tensioactive contenant des copolymères de silicium-polyéther préparés selon un des procédés selon la revendication 1 ou 2.

5. Objet en matériau synthétique contenant des copolymères de silicium-polyéther préparés selon un des procédés selon la revendication 1 ou 2.

6. Utilisation des copolymères de silicium-polyéther alcoxylés, le cas échéant fonctionnalisés davantage, préparés selon l'un quelconque des procédés selon les revendications 1 ou 2 comme tensioactif.
